# EUROPEAN PATENT SPECIFICATION

(11) **EP 3 832 758 B1**
(45) Date of publication and mention of the grant of the patent: **30.04.2025**
(21) Application number: 20759713.9
(22) Date of filing: 21.02.2020
(51) Int. Cl.: H01M 50/46, H01M 10/052, H01G 11/52, H01M 50/403, H01M 50/426, H01M 50/443, H01M 50/446, H01M 50/449, H01M 50/489, H01M 50/497, H01M 50/409

(54) **SEPARATOR FOR LITHIUM SECONDARY BATTERY**
SEPARATOR FÜR LITHIUMSEKUNDÄRBATTERIE
SÉPARATEUR POUR ACCUMULATEUR AU LITHIUM

(30) Priority: 22.02.2019 KR 20190021446
(43) Date of publication of application: 09.06.2021
(73) Proprietor: LG Energy Solution, Ltd., Seoul 07335 (KR)
(72) Inventor: KWON, Hye-Jin, Daejeon 34122 (KR); YOON, Su-Jin, Daejeon 34122 (KR); KIM, Myeong-Soo, Daejeon 34122 (KR); LEE, Je-An, Daejeon 34122 (KR)
(74) Representative: Hoffmann Eitle
(86) International application number: PCT/KR2020/002571
(87) International publication number: WO 2020/171661

(56) References cited:
- WO-A1-2018/003373
- KR-A- 20130 045 601
- KR-A- 20140 026 009
- KR-A- 20140 060 796
- KR-A- 20160 129 762
- KR-B1- 101 341 196
- KR-B1- 101 689 752
- KR-B1- 101 689 752

## Description

### TECHNICAL FIELD

The present disclosure relates to a separator used for a lithium secondary battery and a lithium secondary battery comprising a separator.

### BACKGROUND ART

Recently, there has been an increasing interest in energy storage technology day by day. As the application field of energy storage technology has been extended to mobile phones, camcorders, laptop computers, and even electric cars, many efforts have been devoted to studying and developing electrochemical devices. In this aspect, electrochemical devices are attracting more attention, and especially, development of rechargeable secondary batteries is the focus of attention, and more recently, in the development of batteries, new electrode and battery design for improving the capacity density and specific energy have been studied and developed.

In currently available secondary batteries, lithium secondary batteries developed in early 1990's have much higher operating voltage and energy density than traditional batteries using aqueous electrolyte solutions such as Ni-MH, Ni-Cd, lead-acid batteries, and by virtue of these advantages, lithium secondary batteries are gaining much attention.

Electrochemical devices are produced by many manufacturers, and each shows different safety characteristics. Assessment and management of the safety of electrochemical devices is very grave. The most important consideration is that electrochemical devices should not cause injury to users in the event of malfunction, and for this purpose, Safety Regulations strictly prohibit fire and flame in electrochemical devices. In the safety characteristics of electrochemical devices, overheating and eventual thermal runaway in electrochemical devices or piercing of separators poses a high risk of explosion. Particularly, polyolefin-based porous polymer substrates commonly used for separators of electrochemical devices show extremely severe thermal contraction behaviors at the temperature of 100°C or above due to their properties of materials and manufacturing processes including stretching, causing a short circuit between the positive electrode (cathode) and the negative electrode (anode).

To solve the safety problem of electrochemical devices, for example, lithium secondary batteries, suggestions have been made on a separator having a porous coating layer formed by coating a mixture of excess inorganic particles and a binder polymer on at least one surface of a porous polymer substrate having a plurality of pores.

To improve an adhesion Lami Strength of the porous coating layer, fluorine-based polymer, for example, polyvinylidene fluoride or its copolymer has been mainly used. However, due to having a low melting point of 130 to 150°C, the polyvinylidene fluoride-based binder polymer is incompetent to meet the safety requirement in the recent trend towards larger dimension and higher capacity of electrochemical devices.

Additionally, the use in separators for lithium secondary batteries requires the heat resistance, as well as the Lami Strength with the electrode that satisfies a predetermined value.

### DISCLOSURE

### Technical Problem

The present disclosure is directed to providing a separator with low resistance and improved heat resistance as well as Lami Strength with the electrode that is equal to or higher than that of the existing separator.

The present disclosure is further directed to providing a lithium secondary battery comprising the separator.

### Technical Solution

An aspect of the present disclosure provides a separator for a lithium secondary battery according to the following embodiments.

A first embodiment relates to a separator for a lithium secondary battery comprising a porous polymer substrate; and a porous coating layer formed on at least one surface of the porous polymer substrate, wherein the porous coating layer includes inorganic particles, a polyvinylidene fluoride-based binder polymer, a polyvinylpyrrolidone binder polymer and a dispersant, a weight average molecular weight of the polyvinylpyrrolidone binder polymer is 675,000 to 3,500,000, the weight average molecular weight being measured by gel permeation chromatography using the measurement conditions set out in the description, and a weight (A) of the polyvinylpyrrolidone binder polymer and a weight (B) of the polyvinylidene fluoride-based binder polymer satisfy A/B ≤ 1.

A second embodiment relates to the separator for a lithium secondary battery according to the first embodiment, wherein the weight (A) of the polyvinylpyrrolidone binder polymer and the weight (B) of the polyvinylidene fluoride-based binder polymer satisfy 0.1 ≤ A/B ≤ 1.

A third embodiment relates to the separator for a lithium secondary battery according to the first or second embodiment, wherein a k-value of the polyvinylpyrrolidone binder polymer is 90 to 120, the k-value being measured in accordance with DIN EN ISO 1628-1.

A fourth embodiment relates to the separator for a lithium secondary battery according to any one of the first to third embodiments, wherein the dispersant includes cyanoethylpolyvinylalcohol, polyvinyl butyral, polyvinyl alcohol, polyvinyl acetate, polyethylene oxide, polyarylate, cellulose acetate, cellulose acetate butyrate, cellulose acetate propionate, cyanoethylpullulan, cyanoethylcellulose, cyanoethylsucrose, pullulan, carboxyl methyl cellulose, or a combination thereof.

A fifth embodiment relates to the separator for a lithium secondary battery according to any one of the first to fourth embodiments, wherein the weight average molecular weight of the polyvinylpyrrolidone binder polymer is 900,000 to 3,500,000, the weight average molecular weight being measured by gel permeation chromatography using the measurement conditions set out in the description.

A sixth embodiment relates to the separator for a lithium secondary battery according to the fifth embodiment, wherein the weight average molecular weight of the polyvinylpyrrolidone binder polymer is 950,000 to 2,500,000, the weight average molecular weight being measured by gel permeation chromatography using the measurement conditions set out in the description.

A seventh embodiment relates to the separator for a lithium secondary battery according to any one of the first to sixth embodiments, wherein the weight (A) of the polyvinylpyrrolidone binder polymer and the weight (B) of the polyvinylidene fluoride-based binder polymer satisfy 0.15 ≤ A/B ≤ 0.35.

An eighth embodiment relates to the separator for a lithium secondary battery according to any one of the first to seventh embodiments, wherein a weight ratio of the inorganic particles and a total amount of the binder polymer is 80 : 20 to 50 : 50.

A ninth embodiment relates to the separator for a lithium secondary battery according to any one of the first to eighth embodiments, wherein the polyvinylidene fluoride-based binder polymer includes polyvinylidene fluoride, polyvinylidene fluoride-co-hexafluoropropylene, polyvinylidene fluoride-co-trifluoroethylene, polyvinylidene fluoride-co-chlorotrifluoroethylene, polyvinylidene fluoride-co-tetrafluoroethylene, or a combination thereof.

A tenth embodiment relates to the separator for a lithium secondary battery according to any one of the first to ninth embodiments, wherein resistance of the separator is 1 Ω(ohm) or less, the resistance being measured by the alternating current method at 25 °C when the separator is immersed in a 1M LiPF₆-ethylene carbonate/ethylmethyl carbonate (weight ratio 3:7) electrolyte solution.

An eleventh embodiment relates to the separator for a lithium secondary battery according to any one of the first to tenth embodiments, wherein the porous coating layer is formed from a first binder polymer composition containing a polyvinylpyrrolidone binder polymer dissolved in a first organic solvent and a second binder polymer composition containing a polyvinylidene fluoride-based binder polymer dissolved in a second organic solvent.

A twelfth embodiment relates to a lithium secondary battery comprising a positive electrode, a negative electrode and a separator interposed between the positive electrode and the negative electrode, wherein the separator is defined in any one of the first to eleventh embodiments.

A thirteenth embodiment relates to the lithium secondary battery according to the twelfth embodiment, wherein a Lami Strength between the positive electrode or the negative electrode and the separator is 0.15 N/25mm (15 gf/25mm) or more, the Lami strength being measured in accordance with the method set out in the description.

### Advantageous Effects

According to an embodiment of the present disclosure, it is possible to provide a separator with improved heat resistance and low resistance as well as Lami Strength that is equal or similar to that of the existing separator by using a predetermined amount of polyvinylpyrrolidone binder polymer having a predetermined weight average molecular weight relative to a polyvinylidene fluoride-based binder polymer.

### BEST MODE

Hereinafter, the present disclosure will be described in detail. It should be understood that the terms or words used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

It will be further understood that when an element is referred to as being ┌connected to┘ another element, it can be ┌directly connected to┘ the other element or intervening elements may be present. Additionally, the connection covers physical connection as well as electrochemical connection.

The term ┌comprises┘ when used in this specification, specifies the presence of stated elements, but does not preclude the presence or addition of one or more other elements, unless the context clearly indicates otherwise.

Additionally, ┌comprise┘ and/or ┌comprising┘ when used in this specification, specifies the presence of stated features, integers, steps, operations, elements, components and/or groups thereof, but does not preclude the presence or addition of one or more other features, integers, operations, elements, components, and/or groups thereof.

It will be understood that ┌about┘ and ┌substantially┘ are used herein in the sense of at, or nearly at, when given the manufacturing and material tolerances inherent in the stated circumstances and are used to prevent the unscrupulous infringer from unfairly taking advantage of the disclosure where exact or absolute figures are stated as an aid to understanding the present disclosure.

It will be further understood that ┌combination(s) thereof┘ in Markush type language as used herein, refers to a mixture or combination of one or more selected from the group consisting of elements stated in Markush type language, and specifies the inclusion of one or more selected from the group consisting of the elements.

┌A and/or B┘ when used in this specification, specifies ┌either A or B or both┘ .

In a separator having a porous coating layer, to improve the Lami Strength of the porous coating layer, the use of a polyvinylidene fluoride-based binder polymer alone results in low safety due to the low melting point of the polyvinylidene fluoride-based binder polymer.

Accordingly, there is a demand for separators with higher heat resistance than those using a polyvinylidene fluoride-based binder polymer and an equal or improved Lami Strength with the electrode. Additionally, there is a demand for separators with low resistance.

To meet the demand, the inventors aim at providing a separator having a porous coating layer using a polyvinylpyrrolidone (PVP) binder polymer having the weight average molecular weight of 675,000 to 3,500,000 and a polyvinylidene fluoride-based binder polymer together, in which the weight of the polyvinylpyrrolidone binder polymer is equal to or less than the weight of the polyvinylidene fluoride-based binder polymer to improve the Lami Strength between the separator and the electrode, improve the heat resistance, and reduce the resistance.

In particular, the separator according to an aspect of the present disclosure uses the polyvinylidene fluoride-based binder polymer and the polyvinylpyrrolidone binder polymer dissolved in a solvent, so that the polymers are coated on the surface of inorganic particles.

Accordingly, the separator for a lithium secondary battery according to an aspect of the present disclosure includes:
a porous polymer substrate; and
a porous coating layer formed on at least one surface of the porous polymer substrate,
wherein the porous coating layer includes inorganic particles, a polyvinylidene fluoride-based binder polymer, a polyvinylpyrrolidone binder polymer and a dispersant,
the polyvinylidene fluoride-based binder polymer and the polyvinylpyrrolidone binder polymer are not particles, and they coat all or part of the surfaces of the inorganic particles,
the weight average molecular weight of the polyvinylpyrrolidone binder polymer is 675,000 to 3,500,000, and
the weight A of the polyvinylpyrrolidone binder polymer and the weight B of the polyvinylidene fluoride-based binder polymer satisfy A/B ≤ 1.

**In** an aspect of the present disclosure, the polyvinylpyrrolidone binder polymer used includes a repeating unit represented by the following chemical formula 1.

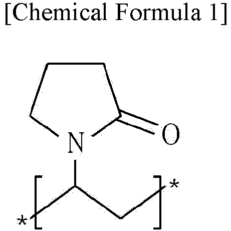

The polyvinylpyrrolidone binder polymer has the glass transition temperature Tg of 150 to 180°C and high heat resistance. The polyvinylpyrrolidone binder polymer has a lactam ring structure, and thus is chemically stable. Additionally, due to the high polarity of the carbonyl group (C=O), the polyvinylpyrrolidone binder polymer is suitable as the binder polymer of the porous coating layer in terms of improved dispersion and mobility of the porous coating layer forming slurry.

The weight average molecular weight of the polyvinylpyrrolidone binder polymer is 675,000 to 3,500,000. When the weight average molecular weight of the polyvinylpyrrolidone binder polymer is less than 675,000, the heat resistance of the separator decreases and thermal shrinkage is high, and when the weight average molecular weight is more than 3,500,000, it is impossible to prepare the porous coating layer slurry and perform the coating process due to high viscosity.

In a particular embodiment of the present disclosure, the weight average molecular weight of the polyvinylpyrrolidone binder polymer may be 675,000 or more, or 800,000 or more, or 900,000 or more, or 950,000 or more, or 1,000,000 or more within the above range, and the weight average molecular weight of the polyvinylpyrrolidone binder polymer may be 3,500,000 or less, or 3,000,000 or less, or 2,500,000 or less within the above range. For example, the weight average molecular weight may be 950,000 to 2,500,000 in terms of enhanced heat resistance and adhesion and high process performance.

In this instance, the weight average molecular weight may be measured using gel permeation chromatography (GPC) (PL GPC220, Agilent Technologies).

In detail, the measurement may be performed under the following analysis conditions:
- Column: PL MiniMixed B x 2
- Solvent: THF
- Flow rate: 0.3 ml/min
- Specimen concentration: 2.0 mg/ml
- Injection amount: 10 µℓ
- Column temperature: 40°C
- Detector: Agilent RI detector
- Standard: Polystyrene (fitted to a third degree polynominal)
- Data processing: ChemStation

The polyvinylpyrrolidone binder polymer according to the present disclosure is a non-crosslinked binder polymer.

In particular, the polyvinylpyrrolidone binder polymer is structurally free of reactive groups that cause crosslinking reactions, and the separator according to an aspect of the present disclosure does not include an initiator and a curing agent, and there is no crosslinking reaction. In more detail, the polyvinylpyrrolidone binder polymer may have hydrogen bonding due to the high polarity of the carbonyl group (C=O), but chemical bonding cannot occur without an initiator and a curing agent. The weight A of the polyvinylpyrrolidone binder polymer is equal to or less than the weight B of the polyvinylidene fluoride-based binder polymer. When the polyvinylpyrrolidone binder polymer is not included, the resistance value is high, and it is impossible to provide a separator with low resistance according to the present disclosure. When a ratio A/B of the weight A of the polyvinylpyrrolidone binder polymer to the weight B of the polyvinylidene fluoride-based binder polymer is higher than 1, i.e., when the weight A of the polyvinylpyrrolidone binder polymer is higher than the weight B of the polyvinylidene fluoride-based binder polymer, the resistance value is high and the Lami Strength with the electrode is low, and thus it is impossible to use as a separator for a lithium secondary battery.

In a particular embodiment of the present disclosure, the ratio A/B between the weight A of the polyvinylpyrrolidone binder polymer and the weight B of the polyvinylidene fluoride-based binder polymer may be 0.01 or more or, 0.1 or more, or 0.15 or more within the above-described range, and the ratio A/B between the weight A of the polyvinylpyrrolidone binder polymer and the weight B of the polyvinylidene fluoride-based binder polymer may be 1 or less, or 0.8 or less, or 0.7 or less, or 0.5 or less, or 0.35 or less within the above-described range.

It is possible to achieve the object of the present disclosure more effectively within the above-described range. That is, it is possible to provide an improved separator with reduced air permeability, low resistance, good Lami Strength with the electrode and low thermal shrinkage. For example, when the weight A of the polyvinylpyrrolidone binder polymer and the weight B of the polyvinylidene fluoride-based binder polymer satisfy 0.15 ≤ A/B ≤ 0.35, it is possible to provide an improved separator with reduced air permeability, low resistance, good Lami Strength with the electrode and low thermal shrinkage.

In a particular embodiment of the present disclosure, a k-value of the polyvinylpyrrolidone binder polymer may be 90 to 120. It is possible to achieve the object of the present disclosure more effectively within the above-described range. The k-value of the polyvinylpyrrolidone binder polymer may be 90 or more within the above-described range, and may be 120 or less within the above-described range. For example, when the k-value is in the range of 90 to 120, it is desirable in terms of high heat resistance and good Lami Strength.

The term 'k-value' as used herein is a value about intrinsic viscosity of thermoplastic resin, and is also known as Fikentscher's K-value. The K-value may be measured in accordance with DIN EN ISO 1628-1.

In a particular embodiment of the present disclosure, the porous coating layer includes the polyvinylidene fluoride-based binder polymer as the binder polymer.

The polyvinylidene fluoride-based binder polymer has adhesive properties, and provides the bond strength between the porous polymer substrate and the porous coating layer or between the porous coating layer and the electrode. Additionally, the polyvinylidene fluoride-based binder polymer serves to bind the inorganic particles in the porous coating layer to prevent the separation of the inorganic particles.

In a particular embodiment of the present disclosure, the polyvinylidene fluoride-based binder polymer may include polyvinylidene fluoride, polyvinylidene fluoride-co-hexafluoropropylene, polyvinylidene fluoride-co-trifluoroethylene, polyvinylidene fluoride-co-chlorotrifluoroethylene, polyvinylidene fluoride-co-tetrafluoroethylene, or a combination thereof.

The porous coating layer according to an aspect of the present disclosure includes the dispersant.

The dispersant is used to disperse the inorganic particles to prevent the agglomeration of solids when forming the porous coating layer.

In a particular embodiment of the present disclosure, the dispersant may include cyanoethylpolyvinylalcohol, polyvinyl butyral, polyvinyl alcohol, polyvinyl acetate, polyethylene oxide, polyarylate, cellulose acetate, cellulose acetate butyrate, cellulose acetate propionate, cyanoethylpullulan, cyanoethylcellulose, cyanoethylsucrose, pullulan, carboxyl methyl cellulose, or a combination thereof.

The dispersant may be present in an amount of 0.1 to 10 parts by weight, or 0.5 to 7.5 parts by weight based on the total amount of the porous coating layer.

The separator according to an aspect of the present disclosure includes the polyvinylpyrrolidone binder polymer to improve the heat resistance. As the polyvinylpyrrolidone binder polymer serves to improve the heat resistance, when the polyvinylpyrrolidone binder polymer is located closer to the porous polymer substrate, the heat resistance may be improved so much. In contrast, the polyvinylidene fluoride-based binder polymer as described below is advantageous for improved adhesion with the electrode, and is preferably disposed on the surface of the porous coating layer.

To this end, the porous coating layer may be formed from a first binder polymer composition containing a polyvinylpyrrolidone binder polymer dissolved in a first organic solvent and a second binder polymer composition containing a polyvinylidene fluoride-based binder polymer dissolved in a second organic solvent.

In this instance, the first organic solvent has a higher boiling point than the second organic solvent.

For example, the first organic solvent may be ethanol, n-propanol, isopropanol, n-butanol, sec-butanol, isobutanol, tert-butanol or water.

For example, the second organic solvent may include acetone, tetrahydrofuran, methylene chloride, chloroform, methylethylketone, or a combination thereof.

In the present disclosure, the inorganic particles are not limited to a particular type if they are electrochemically stable. That is, the inorganic particles that may be used in the present disclosure are not limited to a particular type if they do not cause oxidation and/or reduction reactions in the operating voltage range (for example, 0~5V versus Li/Li⁺) of the electrochemical device used. In particular, the use of inorganic particles of high dielectric constants as the inorganic particles contributes to the increased degree of dissociation of an electrolyte salt, for example, a lithium salt, in a liquid electrolyte, thereby improving the ionic conductivity of an electrolyte solution.

By the above-described reasons, the inorganic particles may include inorganic particles having the dielectric constant of 5 or more, inorganic particles capable of transporting lithium ions and a combination thereof.

The inorganic particles having the dielectric constant of 5 or more may include at least one selected from the group consisting of Al₂O₃, SiO₂, ZrO₂, AlO(OH), TiO₂, BaTiO₃, Pb(ZrₓTi₁₋ₓ)O₃ (PZT, 0 < x < 1), Pb₁₋ₓLaₓZr_{1-y}Ti_{y}O₃ (PLZT, 0 < x < 1, 0 < y < 1), (1-x)Pb(Mg_{1/3}Nb_{2/3})O₃-xPbTiO₃ (PMN-PT, 0 < x < 1), hafnia (HfO₂), SrTiO₃, SnO₂, CeO₂, MgO, NiO, CaO, ZnO and SiC.

The inorganic particles capable of transporting lithium ions may include at least one selected from the group consisting of lithium phosphate (Li₃PO₄), lithium titanium phosphate (LiₓTi_{y}(PO₄)₃, 0 < x < 2, 0 < y < 3), lithium aluminum titanium phosphate (LiₓAl_{y}Ti_{z}(PO₄)₃, 0 < x < 2, 0 < y < 1, 0 < z < 3), (LiAlTiP)ₓO_{y}-based glass (0 < x < 4, 0 < y < 13), lithium lanthanum titanate (LiₓLa_{y}TiO₃, 0 < x < 2, 0 < y < 3), lithium germanium thiophosphate (LiₓGe_{y}P_{z}S_{w}, 0 < x < 4, 0 < y < 1, 0 < z < 1, 0 < w < 5), lithium nitride (LiₓN_{y}, 0 < x <4, 0 < y < 2), SiS₂-based glass (LiₓSi_{y}S_{z}, 0 < x < 3, 0 < y < 2, 0 < z < 4) and P₂S₅-based glass (LiₓP_{y}S_{z}, 0 < x < 3, 0 < y < 3, 0 < z < 7).

Additionally, the average particle size of the inorganic particles is not particularly limited, but for the coating layer of a uniform thickness and appropriate porosity, the average particle size preferably ranges between 0.001 and 10 µm. When the average particle size is smaller than 0.001 µm, dispersion may be reduced, and when the average particle size is larger than 10 µm, the thickness of the coating layer may increase.

A weight ratio of the inorganic particles and the total amount of the binder polymer (the polyvinylidene fluoride-based binder polymer and the polyvinylpyrrolidone binder polymer) may be 80 : 20 to 50 : 50. When the weight ratio of the inorganic particles to the total amount of the binder polymer satisfies the above range, it is possible to prevent reductions in the pore size and the porosity of the porous coating layer due to the high amount of the binder polymer, and reduction in the peel resistance of the coating layer due to the low amount of the binder polymer.

In a particular embodiment of the present disclosure, the porous coating layer may be formed on one or two surfaces of the porous polymer substrate.

In the present disclosure, the porous polymer substrate is a porous film, and may include, without limitation, any type that may be commonly used for separator materials of electrochemical devices to provide channels along which lithium ions move while preventing a short circuit by electrically separating the negative electrode (anode) and the positive electrode (cathode).

In detail, the porous polymer substrate may be a porous polymer film substrate or a porous polymer nonwoven substrate.

The porous polymer film substrate may be a porous polymer film of polyolefin such as polyethylene, polypropylene, polybutene and polypentene, and the polyolefin porous polymer film substrate exhibits a shutdown function, for example, at the temperature of 80°C to 130°C.

In this instance, the polyolefin porous polymer film substrate may be made of polyolefin-based polymer including polyethylene such as high density polyethylene, linear low density polyethylene, low density polyethylene and ultra high molecular weight polyethylene, polypropylene, polybutylene and polypentene, used singly or in combination.

Additionally, the porous polymer film substrate may be formed in the shape of a film using various types of polymers such as the above-described polyolefin as well as polyester. Additionally, the porous polymer film substrate may be formed by stacking two or more film layers, and each film layer may be formed from polymer such as polyolefin and polyester as described above, used singly or in combination.

Additionally, in addition to the polyolefin-based polymer, the porous polymer film substrate and the porous nonwoven substrate may be formed from at least one of polyethyleneterephthalate, polybutyleneterephthalate, polyester, polyacetal, polyamide, polycarbonate, polyimide, polyetheretherketone, polyethersulfone, polyphenyleneoxide, polyphenylenesulfide and polyethylenenaphthalene.

The thickness of the porous polymer substrate is not particularly limited, but the thickness is particularly 1 to 100 µm, more particularly 5 to 50 µm, and with the recent movement towards higher output/higher capacity of batteries, using the porous polymer substrate of a thin film is advantageous. The pore diameter of the porous polymer substrate may be 10 nm to 100 nm, or 10 nm to 70nm, or 10 nm to 50nm, or 10 nm to 35nm, and the porosity may be 5% to 90%, preferably 20% to 80%. However, in the present disclosure, these ranges may be subject to change depending on specific embodiments or necessity.

The pores of the porous polymer substrate have many types of pore structures, and it falls within the present disclosure when any of the average pore size measured using a porosimeter and the average pore size observed on FE-SEM satisfies the above condition.

Here, a commonly known uniaxially-oriented dry separator is on the basis of the pore size at the center in the TD direction, not in the MD direction, on FE-SEM, and a porous polymer substrate of mesh structure (for example, a wet PE separator) is on the basis of the pore size measured using a porosimeter.

The thickness of the porous coating layer is not particularly limited, but the thickness is particularly 1 to 10 µm, more particularly 1.5 to 6 µm, and likewise, the porosity of the porous coating layer is not particularly limited, but the porosity is preferably 35 to 65%.

In addition to the inorganic particles and the binder polymer as the porous coating layer component, the separator according to an aspect of the present disclosure may further include an additive.

The separator according to an aspect of the present disclosure may be manufactured by the following method. However, the present disclosure is not limited thereto.

First, (S1) a porous coating layer forming slurry is prepared, the porous coating layer forming slurry including inorganic particles, a polyvinylidene fluoride-based binder polymer and a dispersant in a binder polymer solution containing a polyvinylpyrrolidone binder polymer having the weight average molecular weight of 675,000 to 3,500,000 dissolved in a solvent; and
(S2) the porous coating layer forming slurry is coated on at least one surface of a porous polymer substrate and dried to form a porous coating layer,

The ratio of the weight (A) of the polyvinylpyrrolidone binder polymer and the weight (B) of the polyvinylidene fluoride-based binder polymer satisfies A/B ≤ 1.

First, the binder polymer solution containing the polyvinylpyrrolidone binder polymer dissolved in the solvent is prepared.

In a particular embodiment of the present disclosure, the solvent may be acetone, water, alcohol or a combination thereof.

In this instance, the step (S1) may include preparing the porous coating layer forming slurry using a first binder polymer composition containing a polyvinylpyrrolidone binder polymer dissolved in a first organic solvent and a second binder polymer composition containing a polyvinylidene fluoride-based binder polymer dissolved in a second organic solvent.

In this instance, the first organic solvent has a higher boiling point than the second organic solvent.

For example, the first organic solvent may be ethanol, n-propanol, isopropanol, n-butanol, sec-butanol, isobutanol, tert-butanol or water.

For example, the second organic solvent may include acetone, tetrahydrofuran, methylene chloride, chloroform, methylethylketone, or a combination thereof.

Subsequently, inorganic particles are put and dispersed in the binder polymer solution, and a polyvinylidene fluoride-based binder polymer and a dispersant are dissolved to prepare the porous coating layer forming slurry containing the inorganic particles dispersed therein. The inorganic particles may be added after they are pulverized to a predetermined diameter, or the inorganic particles may be added to the binder polymer solution, pulverized to a predetermined controlled diameter using the ball mill method and dispersed.

The polyvinylpyrrolidone binder polymer, the inorganic particles, the polyvinylidene fluoride-based binder polymer and the dispersant are as described above.

Subsequently, the porous coating layer forming slurry is coated on at least one surface of the porous polymer substrate and dried to form a porous coating layer (S2).

The method for coating the porous coating layer forming slurry on the porous polymer substrate is not limited to a particular type, but a slot coating method or a dip coating method is desirable. The slot coating involves coating a composition supplied through a slot die onto the front surface of the substrate, and may control the thickness of the coating layer according to the flow rate supplied from a constant volume pump. Additionally, the dip coating is a coating method including dipping the substrate in a tank containing a composition and may control the thickness of the coting layer according to the concentration of the composition and the speed at which the substrate is taken out of the composition tank, and for more accurate control of the coating thickness, after dipping, measurement may be performed through a Meyer bar.

The porous polymer substrate coated with the porous coating layer forming slurry is dried using a dryer such as an oven to form the porous coating layer on at least one surface of the porous polymer substrate.

In the porous coating layer, the inorganic particles and the binder polymer (the polyvinylidene fluoride-based binder polymer and the polyvinylpyrrolidone binder polymer) are packed in contact such that the inorganic particles are bonded by the binder polymer, forming interstitial volumes therebetween, and the interstitial volumes are empty spaces that are to be pores.

That is, the binder polymer may bind the inorganic particles to hold them together, and for example, the polyvinylpyrrolidone binder polymer or the polyvinylidene fluoride-based binder polymer may adhere and immobilize the inorganic particles. Additionally, interstitial volumes between the inorganic particles are empty spaces that are to be the pores of the porous coating layer, and may be spaces defined by the inorganic particles substantially in surface contact in the closely packed or densely packed structure by the inorganic particles.

The drying may be performed in a drying chamber, and in this instance, the condition of the drying chamber is not particularly limited due to non-solvent coating.

However, the drying is performed in a humid condition, and thus the polyvinylidene fluoride-based binder polymer may be mainly distributed on the surface of the porous coating layer.

An electrochemical device according to an aspect of the present disclosure includes a positive electrode (cathode), a negative electrode (anode), and a separator interposed between the positive electrode and the negative electrode, and the separator is the above-described separator according to an embodiment of the present disclosure.

The electrochemical device may include any type of device using electrochemical reactions, and for example, may include primary and secondary batteries, fuel cells, solar cells or capacitors such as super capacitors. **In** particular, among the secondary batteries, lithium secondary batteries including lithium metal secondary batteries, lithium ion secondary batteries, lithium polymer secondary batteries or lithium ion polymer secondary batteries are desirable.

The positive and negative electrodes to be used with the separator of the present disclosure are not limited to a particular type, and may be manufactured by binding an electrode active material to an electrode current collector by a common method known in the technical field pertaining to the present disclosure. Of the electrode active material, non-limiting examples of the positive electrode active material may include general positive electrode active materials commonly used in positive electrodes of electrochemical devices, and preferably include lithium manganese oxide, lithium cobalt oxide, lithium nickel oxide, lithium iron oxide or their lithium composite oxide. Non-limiting examples of the negative electrode active material may include general negative electrode active materials commonly used in negative electrodes of electrochemical devices, and preferably include lithium adsorption materials such as lithium metal or lithium alloy, carbon, petroleum coke, activated carbon, graphite or other carbons. Non-limiting examples of the positive electrode current collector may include a foil made from aluminum, nickel or a combination thereof, and non-limiting examples of the negative electrode current collector may include a foil made from copper, gold, nickel or copper alloy or a combination thereof.

An electrolyte solution, which may be used in the electrochemical device of the present disclosure, includes, but is not limited to, electrolyte solutions in which a salt is dissolved or dissociated in an organic solvent, the salt having a structure represented by, for example, A⁺B⁻, wherein A⁺ is an alkali metal cation such as Li⁺, Na⁺, K⁺ or a combination thereof, and B⁻ is an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻ or a combination thereof, the organic solvent including propylene carbonate (PC), ethylene carbonate (EC), diethylcarbonate (DEC), dimethylcarbonate (DMC), dipropylcarbonate (DPC), dimethyl sulfoxide, acetonitrile, dimethoxyethane, diethoxyethane, tetrahydrofuran, N-methyl-2-pyrrolidone (NMP), ethylmethylcarbonate (EMC), γ-butyrolactone, or their mixtures.

The pouring of the electrolyte solution may be performed in any suitable step of a battery manufacturing process according to a manufacturing process and required properties of a final product. That is, the pouring of the electrolyte solution may be applied before battery assembly or in the final step of battery assembly.

Hereinafter, the present disclosure will be described in detail through examples. However, the examples of the present disclosure may be modified in many other forms, and the scope of the present disclosure should not be construed as being limited to the following examples. The examples of the present disclosure are provided to fully explain the present disclosure to those having ordinary knowledge in the art to which the present disclosure pertains.

### Example 1

First, a polyvinylpyrrolidone binder polymer having the weight average molecular weight of 2,500,000 and the k-value of 120 is added to a first organic solvent, isopropylalcohol, and dissolved at 50°C for about 4 hours to prepare a binder polymer solution. Subsequently, Al₂O₃ inorganic particles (Alteo, P172LSB, particle size: 500nm) and boehmite inorganic particles are added to the binder polymer solution at a ratio of 85 : 15, and the total amount of the inorganic particles is 78 parts by weight based on 100 parts by weight of the porous coating layer.

Meanwhile, cyanoethylpolyvinylalcohol as a dispersant, and polyvinylidene fluoride-co-hexafluoropropylene and polyvinylidene fluoride-co-chlorotrifluoroethylene as a polyvinylidene fluoride-based binder polymer are dissolved in a second organic solvent, acetone, at 50°C for about 4 hours, the solution is added to the result of the binder polymer solution containing the dispersed inorganic particles, and the inorganic particles are pulverized and dispersed using the ball mill method for 12 hours to prepare a porous coating layer forming slurry.

In this instance, the composition of the porous coating layer forming slurry is controlled as shown in Table 2.

A separator having a porous coating layer is manufactured by coating the porous coating layer forming slurry on two surfaces of a 9 µm thick polyethylene porous substrate (Toray, porosity: 45%) in a loading amount of 13.5 g/m² by the dip coating method at 23°C and the relative humidity of 40% and drying to form the porous coating layer.

### Example 2

A separator is manufactured by the same method as example 1 except that the weight average molecular weight and the k-value of the polyvinylpyrrolidone binder polymer are each controlled as shown in Table 1.

### Comparative example 1

A separator is manufactured by the same method as example 1 except that the weight average molecular weight and the k-value of the polyvinylpyrrolidone binder polymer are each controlled as shown in Table 1.

**[Table 1]**

| Classification | | Example 1 | Example 2 | Comparative example 1 |
|---|---|---|---|---|
| Weight average molecular weight | | 2,500,000 | 950,000 | 400,000 |
| k-value | | K-120 | K-90 | K-60 |
| Thickness (µm) | | 18 | 18 | 18 |
| Air permeability (s/100cc) | | 380 | 369 | 260 |
| Lami Strength (N/25mm (gf/25mm)) | | 0.65 (66) | 0.60 (61) | 0.02 (2) |
| Resistance (ohm) | | 0.66 | 0.65 | 0.61 |
| Thermal shrinkage (150°C, 30m) | MD | 19 | 17 | 50 |
| | TD | 17 | 13 | 51 |

As can be seen from comparative example 1 in the above Table 1, when the weight average molecular weight of the polyvinylpyrrolidone binder polymer does not satisfy a predetermined value, the Lami Strength between the porous coating layer of the separator and the electrode is low, and adhesion is poor.

In contrast, examples 1 and 2 provide the improved separators with high Lami Strength, low thermal shrinkage and a resistance value of the equivalent level to comparative example.

### Examples 3 to 5

Separators are manufactured by the same method as example 1 except that the composition of the porous coating layer forming slurry is controlled as shown in Table 2.

### Comparative examples 2 to 3

Separators are manufactured by the same method as example 1 except that the composition of the porous coating layer forming slurry is controlled as shown in Table 2.

**[Table 2]**

| Classification | | | Comparati ve example 2 | Example 3 | Example 4 | Example 1 | Example 5 | Comparati ve example 3 |
|---|---|---|---|---|---|---|---|---|
| Inorganic particles (Alumina : Boehmite = 85 : 15) (based on 100 parts by weight of porous coating layer) | | | 78 | 78 | 78 | 78 | 78 | 78 |
| Polyvinylpyrrolidone (based on 100 parts by weight of porous coating layer) | | | 0 | 2.5 | 3 | 5 | 10 | 12 |
| Polyvinyli denefluori de-based binder polymer | PVDF-HFP | | 15.5 | 13.56 | 13.18 | 11.63 | 7.75 | 6.2 |
| | PVDF-CTFE | | 4.5 | 3.94 | 3.83 | 3.38 | 2.25 | 1.8 |
| Dispersan t | Cyanoethyl polyvinylal cohol | | 2 | 2 | 2 | 2 | 2 | 2 |
| Acetone : Isopropyl alcohol (Volume ratio) | | | 100: 0 | 82 : 18 | 82:18 | 82:18 | 82:18 | 82:18 |
| Thickness (µm) | | | **18** | 18 | 18 | 18 | 18 | 18 |
| Air permeability (s/100cc) | | | **1600** | 220 | 250 | 380 | 1010 | 3520 |
| Resistance (ohm) | | | **1.03** | 0.76 | 0.79 | 0.66 | 0.90 | **1.44** |
| Lami Strength (N/25mm (gf/25mm)) | | | 0.59 (60) | 0.64 (65) | 0.69 (70) | 0.65 (66) | 0.15 (15) | 0.05 (5) |
| Thermal shrinkage (150 °C, 30m) | | MD | 20 | 24 | 19 | 17 | 4 | 3 |
| | | TD | 18 | 18 | 17 | 13 | 3 | 2 |

In the above Table 2, comparative example 2 does not use the polyvinylpyrrolidone binder polymer, and compared to examples 1, 3 to 5, air permeability is not improved, and the resistance value is high.

As in comparative example 3, when the amount of the polyvinylpyrrolidone binder polymer is greater than the weight of the polyvinylidene fluoride-based binder polymer, the Lami Strength between the electrode and the porous coating layer is low, which makes it difficult to manufacture the electrode assembly, and air permeability is high, which makes it difficult to use in separator applications for lithium secondary batteries.

Meanwhile, when the Lami Strength is 0.15 N/25mm (15gf/25mm) or above, in the case of a suitable small battery, example 5 may be used.

### Evaluation results

The details of the evaluation method are as below.

### 1) Thickness measurement method

The thickness of the separator is measured using a thickness measurement instrument (Mitutoyo, VL-50S-B).

### 2) Air permeability measurement method

In accordance with JIS P-8117, air permeability is measured using a Gurley type air permeability tester. In this instance, the time taken for air of 100 cc to pass through the separator having the diameter of 28.6 mm and the area of 645 mm² is measured.

### 3) Resistance measurement

A resistance value when the separators manufactured in examples 1 to 5 and comparative examples 1 to 3 are immersed in the electrolyte solution, is measured by the alternating current method at 25°C using a 1M LiPF₆-ethylene carbonate/ethylmethyl carbonate (Weight ratio 3:7) electrolyte solution.

### 4) Separator-negative electrode Lami Strength (N/25mm (gf/25mm)) measurement

To measure the Lami Strength with the negative electrode, the electrode is manufactured as below.

Artificial graphite as a negative electrode active material, carbon black as a conductive material, Carboxy Methyl Cellulose (CMC) as a dispersant and StyreneButadiene Rubber (SBR) as a binder are put into water at a weight ratio of 96 : 1 : 2 : 2 and mixed together to prepare a negative electrode slurry. The negative electrode slurry is coated in an amount of 3.55 mAh/g on a 50 µm thick copper foil (Cu-foil) as a negative electrode current collector into the shape of a thin polar plate, and dried at 135°C for 3 hours or longer and pressed to manufacture a negative electrode.

The negative electrode manufactured as above is tailored to the size of 25mm X 100mm. The separators manufactured in examples 1 to 5 and comparative examples 1 to 3 are tailored to the size of 25mm X 100mm. The separator and the negative electrode prepared as above are laid over each other, interposed between 100µm PET films, and adhered using a flat plate press. In this instance, the condition of the flat plate press is heated and pressed at 70°C under the pressure of 600kgf for 1 second. The separator and the negative electrode adhered to each other are attached to a slide glass using a double-sided tape. The end part of the adhesive surface (10 mm or less from the end of the adhesive surface) of the separator is peeled off and adhered such that the longitudinal direction is connected to a 25 x 100 mm PET film using a single sided tape. Subsequently, a force is applied 180° at 300 mm/min with the slide glass being placed on a lower holder of UTM instrument (LLOYD Instrument LF Plus) and the PET film adhered with the separator being placed on an upper holder of the UTM instrument, a force required to separate the negative electrode and the porous coating layer opposite the negative electrode is measured.

### 5) Thermal shrinkage measurement method

The thermal shrinkage is calculated by (Initial length - Length after thermal shrink treatment at 150°C/for 30 min)/(Initial length) X 100.

## Claims

1. A separator for a lithium secondary battery, comprising:
a porous polymer substrate; and
a porous coating layer formed on at least one surface of the porous polymer substrate,
wherein the porous coating layer includes inorganic particles, a polyvinylidene fluoride-based binder polymer, a polyvinylpyrrolidone binder polymer and a dispersant,
the polyvinylidene fluoride-based binder polymer and the polyvinylpyrrolidone binder polymer are not particles, and coat part or all of surfaces of the inorganic particles,
a weight average molecular weight of the polyvinylpyrrolidone binder polymer is 675,000 to 3,500,000, the weight average molecular weight being measured by gel permeation chromatography using the measurement conditions set out in the description, and
a weight (A) of the polyvinylpyrrolidone binder polymer and a weight (B) of the polyvinylidene fluoride-based binder polymer satisfy A/B ≤ 1.

2. The separator for a lithium secondary battery according to claim 1, wherein the weight (A) of the polyvinylpyrrolidone binder polymer and the weight (B) of the polyvinylidene fluoride-based binder polymer satisfy 0.1 ≤ A/B ≤ 1.

3. The separator for a lithium secondary battery according to claim 1, wherein a k-value of the polyvinylpyrrolidone binder polymer is 90 to 120, the k-value being measured in accordance with DIN EN ISO 1628-1.

4. The separator for a lithium secondary battery according to claim 1, wherein the dispersant includes cyanoethylpolyvinylalcohol, polyvinyl butyral, polyvinyl alcohol, polyvinyl acetate, polyethylene oxide, polyarylate, cellulose acetate, cellulose acetate butyrate, cellulose acetate propionate, cyanoethylpullulan, cyanoethylcellulose, cyanoethylsucrose, pullulan, carboxyl methyl cellulose, or a combination thereof.

5. The separator for a lithium secondary battery according to claim 1, wherein the weight average molecular weight of the polyvinylpyrrolidone binder polymer is 900,000 to 3,500,000, the weight average molecular weight being measured by gel permeation chromatography using the measurement conditions set out in the description.

6. The separator for a lithium secondary battery according to claim 5, wherein the weight average molecular weight of the polyvinylpyrrolidone binder polymer is 950,000 to 2,500,000, the weight average molecular weight being measured by gel permeation chromatography using the measurement conditions set out in the description.

7. The separator for a lithium secondary battery according to claim 1, wherein the weight (A) of the polyvinylpyrrolidone binder polymer and the weight (B) of the polyvinylidene fluoride-based binder polymer satisfy 0.15 ≤ A/B ≤ 0.35.

8. The separator for a lithium secondary battery according to claim 1, wherein a weight ratio of the inorganic particles and a total amount of the binder polymer is 80 : 20 to 50 : 50.

9. The separator for a lithium secondary battery according to claim 1, wherein the polyvinylidene fluoride-based binder polymer includes polyvinylidene fluoride, polyvinylidene fluoride-co-hexafluoropropylene, polyvinylidene fluoride-co-trifluoroethylene, polyvinylidene fluoride-co-chlorotrifluoroethylene, polyvinylidene fluoride-co-tetrafluoroethylene, or a combination thereof.

10. The separator for a lithium secondary battery according to claim 1, wherein resistance of the separator is 1 Ω(ohm) or less, the resistance being measured by the alternating current method at 25°C when the separator is immersed in a 1M LiPF₆-ethylene carbonate/ethylmethyl carbonate (weight ratio 3:7) electrolyte solution.

11. The separator for a lithium secondary battery according to claim 1, wherein the porous coating layer is formed from a first binder polymer composition containing a polyvinylpyrrolidone binder polymer dissolved in a first organic solvent and a second binder polymer composition containing a polyvinylidene fluoride-based binder polymer dissolved in a second organic solvent.

12. A lithium secondary battery comprising a positive electrode, a negative electrode and a separator interposed between the positive electrode and the negative electrode,
wherein the separator is defined in any one of claims 1 to 11.

13. The lithium secondary battery according to claim 12, wherein a Lami Strength between the positive electrode or the negative electrode and the separator is 0.15 N/25mm (15 gf/25mm) or more, the Lami strength being measured in accordance with the method set out in the description.

## Patentansprüche

1. Separator für eine Lithiumsekundärbatterie, umfassend:
ein poröses Polymersubstrat und
eine poröse Beschichtungsschicht, die auf mindestens einer Oberfläche des porösen Polymersubstrats gebildet ist,
wobei die poröse Beschichtungsschicht anorganische Partikel, ein Bindemittelpolymer auf Polyvinylidenfluoridbasis, ein Polyvinylpyrrolidon-Bindemittelpolymer und ein Dispergiermittel einschließt,
das Bindemittelpolymer auf Polyvinylidenfluoridbasis und das Polyvinylpyrrolidon-Bindemittelpolymer keine Partikel sind und einen Teil oder die gesamten Oberflächen der anorganischen Partikel beschichten,
ein gewichtsmittleres Molekulargewicht des Polyvinylpyrrolidon-Bindemittelpolymer 675.000 bis 3.500.000 beträgt, wobei das gewichtsmittlere Molekulargewicht durch Gelpermeationschromatographie unter Verwendung der in der Beschreibung dargelegten Messbedingungen gemessen wird, und
ein Gewicht (A) des Polyvinylpyrrolidon-Bindemittelpolymers und ein Gewicht (B) des Bindemittelpolymers auf Polyvinylidenfluoridbasis A/B ≤ 1 erfüllt.

2. Separator für eine Lithiumsekundärbatterie gemäß Anspruch 1, wobei das Gewicht (A) des Polyvinylpyrrolidon-Bindemittelpolymers und das Gewicht (B) des Bindemittelpolymers auf Polyvinylidenfluoridbasis 0,1 ≤ A/B ≤ 1 erfüllt.

3. Separator für eine Lithiumsekundärbatterie gemäß Anspruch 1, wobei ein k-Wert des Polyvinylpyrrolidon-Bindemittelpolymers 90 bis 120 beträgt, wobei der k-Wert gemäß DIN EN ISO 1628-1 gemessen wird.

4. Separator für eine Lithiumsekundärbatterie gemäß Anspruch 1, wobei das Dispergiermittel Cyanoethylpolyvinylalkohol, Polyvinylbutyral, Polyvinylalkohol, Polyvinylacetat, Polyethylenoxid, Polyarylat, Celluloseacetat, Celluloseacetatbutyrat, Celluloseacetatpropionat, Cyanoethylpullulan, Cyanoethylcellulose, Cyanoethylsucrose, Pullulan, Carboxylmethylcellulose oder eine Kombination davon einschließt.

5. Separator für eine Lithiumsekundärbatterie gemäß Anspruch 1, wobei das gewichtsmittlere Molekulargewicht des Polyvinylpyrrolidon-Bindemittelpolymers 900.000 bis 3.500.000 beträgt, wobei das gewichtsmittlere Molekulargewicht durch Gelpermeationschromatographie unter den in der Beschreibung dargelegten Messbedingungen gemessen wird.

6. Separator für eine Lithiumsekundärbatterie gemäß Anspruch 5, wobei das gewichtsmittlere Molekulargewicht des Polyvinylpyrrolidon-Bindemittelpolymers 950.000 bis 2.500.000 beträgt, wobei das gewichtsmittlere Molekulargewicht durch Gelpermeationschromatographie unter den in der Beschreibung dargelegten Messbedingungen gemessen wird.

7. Separator für eine Lithiumsekundärbatterie gemäß Anspruch 1, wobei das Gewicht (A) des Polyvinylpyrrolidon-Bindemittelpolymers und das Gewicht (B) des Bindemittelpolymers auf Polyvinylidenfluoridbasis 0,15 ≤ A/B ≤ 0,35 erfüllt.

8. Separator für eine Lithiumsekundärbatterie gemäß Anspruch 1, wobei ein Gewichtsverhältnis der anorganischen Partikel und einer Gesamtmenge des Bindemittelpolymers 80 : 20 bis 50 : 50 beträgt.

9. Separator für eine Lithiumsekundärbatterie gemäß Anspruch 1, wobei das Bindemittelpolymer auf Polyvinylidenfluoridbasis Polyvinylidenfluorid, Polyvinylidenfluor-co-hexafluorpropylen, Polyvinylidenfluorid-co-trifluorethylen, Polyvinylidenfluorid-co-chlortrifluorethylen, Polyvinylidenfluorid-co-tetrafluorethylen oder eine Kombination davon einschließt.

10. Separator für eine Lithiumsekundärbatterie gemäß Anspruch 1, wobei der Widerstand des Separators 1 Ω(Ohm) oder weniger beträgt, wobei der Widerstand durch das Wechselstromverfahren bei 25°C gemessen wird, wenn der Separator in einer 1M LiPF₆-Ethylencarbonat/Ethylmethylcarbonat (Gewichtsverhältnis 3:7)-Elektrolytlösung eingetaucht ist.

11. Separator für eine Lithiumsekundärbatterie gemäß Anspruch 1, wobei die poröse Beschichtungsschicht aus einer ersten Bindemittelpolymerzusammensetzung, die ein in einem ersten organischen Lösungsmittel gelöstes Polyvinylpyrrolidon-Bindemittelpolymer enthält, und einer zweiten Bindemittelpolymerzusammensetzung, die ein in einem zweiten organischen Lösungsmittel gelöstes Bindemittelpolymer auf Polyvinylidenfluoridbasis enthält, gebildet ist.

12. Lithiumsekundärbatterie, umfassend eine positive Elektrode, eine negative Elektrode und einen zwischen der positiven Elektrode und der negativen Elektrode eingefügten Separator umfasst,
wobei der Separator in einem der Ansprüche 1 bis 11 definiert ist.

13. Lithiumsekundärbatterie gemäß Anspruch 12, wobei eine Lami-Festigkeit zwischen der positiven Elektrode oder der negativen Elektrode und dem Separator 0,15 N/25 mm (15 gf/25 mm) oder mehr beträgt, wobei die Lami-Festigkeit gemäß dem in der Beschreibung dargelegten Verfahren gemessen wird.

## Revendications

1. Un séparateur pour une batterie secondaire au lithium, comprenant :
un substrat polymère poreux ; et
une couche de revêtement poreuse formée sur au moins une surface du substrat polymère poreux,
dans lequel la couche de revêtement poreuse comprend des particules inorganiques, un polymère liant à base de fluorure de polyvinylidène, un polymère liant polyvinylpyrrolidone et un dispersant,
le polymère liant à base de fluorure de polyvinylidène et le polymère liant polyvinylpyrrolidone ne sont pas des particules, et recouvrent une partie ou la totalité des surfaces des particules inorganiques,
un poids moléculaire moyen en poids du polymère liant polyvinylpyrrolidone est de 675000 à 3500000, le poids moléculaire moyen en poids étant mesuré par chromatographie par perméation de gel en utilisant les conditions de mesure indiquées dans la description, et
un poids (A) du polymère liant polyvinylpyrrolidone et un poids (B) du polymère liant à base de fluorure de polyvinylidène satisfont à A/B ≤ 1.

2. Le séparateur pour une batterie secondaire au lithium selon la revendication 1, dans lequel le poids (A) du polymère liant polyvinylpyrrolidone et le poids (B) du polymère liant à base de fluorure de polyvinylidène satisfont 0,1 ≤ A/B ≤ 1.

3. Le séparateur pour une batterie secondaire au lithium selon la revendication 1, dans lequel une valeur k du polymère liant polyvinylpyrrolidone est de 90 à 120, la valeur k étant mesurée conformément à DIN EN ISO 1628-1.

4. Le séparateur pour une batterie secondaire au lithium selon la revendication 1, dans lequel le dispersant comprend de l'alcool polyvinylique cyanoéthylique, du butyral polyvinylique, de l'alcool polyvinylique, de l'acétate de polyvinyle, de l'oxyde de polyéthylène, du polyarylate, de l'acétate de cellulose, du butyrate d'acétate de cellulose, du propionate d'acétate de cellulose, du cyanoéthylpullulan, de la cyanoéthylcellulose, du cyanoéthylsucrose, du pullulan, de la carboxylméthylcellulose, ou une combinaison de ceux-ci.

5. Le séparateur pour une batterie secondaire au lithium selon la revendication 1, dans lequel le poids moléculaire moyen en poids du polymère liant polyvinylpyrrolidone est de 900000 à 3500000, le poids moléculaire moyen en poids étant mesuré par chromatographie par perméation de gel en utilisant les conditions de mesure indiquées dans la description.

6. Le séparateur pour une batterie secondaire au lithium selon la revendication 5, dans lequel le poids moléculaire moyen en poids du polymère liant polyvinylpyrrolidone est de 900000 à 2500000, le poids moléculaire moyen en poids étant mesuré par chromatographie par perméation de gel en utilisant les conditions de mesure indiquées dans la description.

7. Le séparateur pour une batterie secondaire au lithium selon la revendication 1, dans lequel le poids (A) du polymère liant polyvinylpyrrolidone et le poids (B) du polymère liant à base de fluorure de polyvinylidène satisfont 0,15 ≤ A/B ≤ 0,35.

8. Le séparateur pour une batterie secondaire au lithium selon la revendication 1, dans lequel un rapport en poids des particules inorganiques et d'une quantité totale de polymère liant est de 80 : 20 à 50 : 50.

9. Le séparateur pour une batterie secondaire au lithium selon la revendication 1, dans lequel le polymère liant à base de fluorure de polyvinylidène comprend du fluorure de polyvinylidène, du fluorure de polyvinylidène-co-hexafluoropropylène, du fluorure de polyvinylidène-co-trifluoroéthylène, du fluorure de polyvinylidène-co-chlorotrifluoroéthylène, du fluorure de polyvinylidène-co-tétrafluoroéthylène, ou une combinaison de ceux-ci.

10. Le séparateur pour une batterie secondaire au lithium selon la revendication 1, dans lequel la résistance du séparateur est de 1 Ω(ohm) ou moins, la résistance étant mesurée par la méthode du courant alternatif à 25°C lorsque le séparateur est immergé dans une solution d'électrolyte LiPF6-carbonate d'éthylène/carbonate d'éthylméthyle 1M (rapport en poids 3:7).

11. Le séparateur pour une batterie secondaire au lithium selon la revendication 1, dans lequel la couche de revêtement poreuse est formée d'une première composition de polymère liant contenant un polymère liant polyvinylpyrrolidone dissous dans un premier solvant organique et d'une deuxième composition de polymère liant contenant un polymère liant à base de fluorure de polyvinylidène dissous dans un deuxième solvant organique.

12. Une batterie secondaire au lithium comprenant une électrode positive, une électrode négative et un séparateur interposé entre l'électrode positive et l'électrode négative,
dans laquelle le séparateur est tel que défini dans l'une quelconque des revendications 1 à 11.

13. La batterie secondaire au lithium selon la revendication 12, dans laquelle une force de Lami entre l'électrode positive ou l'électrode négative et le séparateur est de 0,15 N/25mm (15 gf/25mm) ou plus, la force de Lami étant mesurée conformément à la méthode indiquée dans la description.
